# FASCICULE DE BREVET EUROPEEN

(11) **EP 1 521 151 B1**
(45) Date de publication et mention de la délivrance du brevet: **09.04.2008**
(21) Numéro de dépôt: 04104670.7
(22) Date de dépôt: 24.09.2004
(51) Int. Cl.: G05B 19/4097

(54) **Procédé de conception et de fabrication d'un raccord de tuyaux, notamment pour aéronef**
Verfahren zur Entwicklung und Herstellung von insbesondere in Luftfahrzeugen verwendeten Rohrverbindungsstücken
Method for designing and manufacturing a pipe joint, in particular for aircraft

(30) Priorité: 01.10.2003 FR 0350632
(43) Date de publication de la demande: 06.04.2005
(73) Titulaire: AIRBUS France, 31060 Toulouse (FR)
(72) Inventeur: Lanvin, Hervé, 80800 Bonnay (FR); Rossato, Robert, 31570 Sainte Foy d'Aigrefeuille (FR)
(74) Mandataire: Poulin, Gérard

(56) Documents cités:
- GB-A- 2 248 571
- US-A- 5 117 866
- US-A- 6 112 133
- PARKER HANNIFIN CORPORATION - FLUID CONNECTORS GROUP: "Tube Fittings Products - Quick Reference Guide" BULLETIN 4300-QRG- USA, [Online] mai 1997 (1997-05), XP002274279 Parker Hannifin Corporation - Columbus, OH, USA Extrait de l'Internet: URL:http://www.parker.com/tfd/bulletinpdf/ qrg.pdf> [extrait le 2004-03-19]
- HANS B. KIEF: "NC/CNC Handbuch 2001/02" 2001, HANSER , MÜNCHEN , XP002274280 * page 381 - page 398 *
- LIANG J ET AL: "Synthesis of consolidated data schema for engineering analysis from multiple STEP application protocols" COMPUTER AIDED DESIGN, ELSEVIER PUBLISHERS BV., BARKING, GB, vol. 31, no. 7, juin 1999 (1999-06), pages 429-447, XP004172466 ISSN: 0010-4485
- BLOOMENTHAL M ET AL: "An approach to rapid manufacturing with custom fixturing" PROCEEDINGS OF THE 2000 IEEE INTERNATIONAL CONFERENCE ON ROBOTICS & AUTOMATION, vol. 1, 24 avril 2000 (2000-04-24), pages 212-219, XP010500221 San Francisco, CA, USA
- PARKER HANNIFIN CORPORATION - FLUID CONNECTORS GROUP: "Fluid Connectors Product Directory" 0094-B1/DE-UK-FR, [Online] mars 2003 (2003-03), XP002274303 Parker Hannifin Corporation - Columbus, OH, USA Extrait de l'Internet: URL:http://www.parker.com/eurofcg/Literatu re/Product%20Directory/english/Product%20D irectory.pdf> [extrait le 2004-03-19]

## Description

### DOMAINE TECHNIQUE

Le sujet de cette invention est avant tout un procédé permettant de concevoir et de fabriquer un raccord de tuyaux, et notamment dans un aéronef. Plus particulièrement, elle concerne un procédé de conception et de fabrication d'un tel raccord dans lequel un usinage à grande vitesse est réalisé.

Des raccords des tuyaux dans un aéronef sont des pièces métalliques permettant de raccorder entre elles deux longueurs de tuyaux comme des tuyaux de carburant rigides et droits. Ces raccords comportent généralement un ou plusieurs moyens de fixation sur la structure de l'aéronef. Ils peuvent être en forme de coude, de T, etc. avec une surface interne de forme complexe, non uniforme ou présentant une contre-dépouille.

De façon connue, de tels raccords peuvent être fabriqués par moulage. Ce procédé de fabrication présente plusieurs inconvénients. L'épaisseur minimale de paroi est de l'ordre de 2,3 à 2,6 mm pour des raccords fabriqués en aluminium à cause des caractéristiques mécaniques du matériau et des tolérances de fabrication. Un allégement important des raccords, vivement souhaitable dans l'industrie aéronautique, est difficile. Après le moulage, les embouts de raccordement des tuyaux doivent être usinés pour leur donner un état de surface assez lisse pour donner une étanchéité suffisante. L'usinage supplémentaire complique le procédé. Il faut vérifier chaque raccord par un essai en pression après la fabrication à cause du risque d'apparition de bulles ou de porosité dans la paroi de ce raccord lors du moulage. Une forme en dépouille de l'extérieur est obligatoire pour démouler les raccords, ce qui nuit à l'écoulement en accroissant les pertes de charge et les turbulences.

Un autre inconvénient important est la nécessité de devoir fabriquer les moules de fabrication, avec ici aussi des opérations de fabrication qui enchérissent le coût du raccord. Enfin, il est fréquent qu'un raccord doive être modifié pour l'adapter à d'autres conditions de raccordement, mais il est malaisé d'appliquer un tel changement même modeste car le moule doit être refait

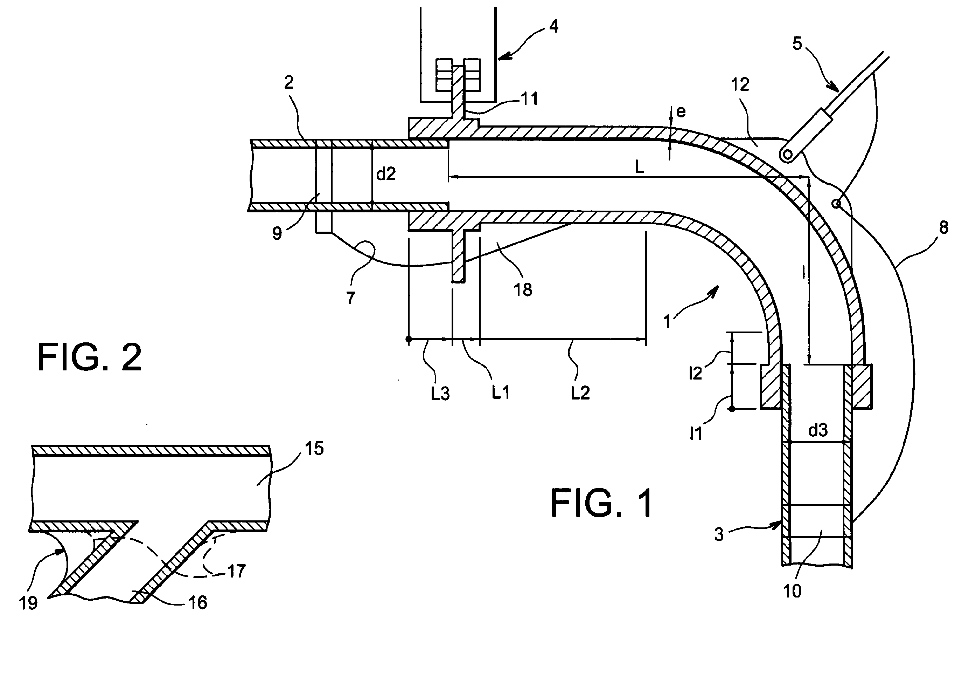

L'article de Hans B.Kief extrait de "NC/CNC Handbuch 2001:02", 2001, Hanser, München, XP 0022 74280 et intitulé RECHNERUNTERSTUTZTES KONSTRUIEREN UND FERTIGEN: CAD + CAM décrit la conception de pièces numériques pour créer un modèle et la fabrication en utilisant le modèle créé. Toutes les étapes du procédé emploient un ordinateur. D'après la figure 1, les étapes de CAD, CAE, CAP et CAN comprennent respectivement : une conception d'ébauche du modèle, d'après des normes, des restrictions, des tableaux et des catalogues ; des calculs, par exemple de résistance mécanique, des optimisations, par exemple de poids ou de volume, et des simulations ; un ordonnancement de la fabrication ; et enfin une sélection des machines et des outils, une séquence d'opérations d'usinage, un calcul des trajets d'usinage et une simulation, et enfin la fabrication du produit.

US 5 117 866 A (NICHOLAS JOHN C**)** révèle qu'un raccord à bifurcation entre un tuyau d'entrée et une pluralité de tuyaux de sortie est obtenu en perçant et taraudant une masse métallique.

La brochure de Parker-Hanifin Corporation-Fluid Connectors Group : "Fluid Connectors Product Directory", 00946B1/DE-UK-FR, mars 2003, XP 002274303 (extraite de l'Internet) montre des raccords de tuyaux dont certains comprennent des parties tubulaires et la surface interne comporte un coude ou une contre-dépouille. Une autre brochure de la même société ("Tube Fittings Product - Quick Reference Guide") Bulletin 4300 - QRG- USA, mai 1997, XP00 2274279 (extrainte de l'Internet) indique que des raccords de tuyaux peuvent être produits à partir de barres extrudées, découpées, forgées et usinées.

L'invention concerne un procédé différent pour concevoir et fabriquer les raccords de tuyaux. Son but est à la fois d'alléger la tâche des concepteurs du plan du raccord et de son usinage et de produire un meilleur raccord. Les résultats intermédiaires obtenus sont autant que possible exploités directement dans les étapes suivantes du procédé, grâce à un choix judicieux des méthodes de conception et de fabrication. Le moulage est délaissé. Le raccord sera en général mieux conçu et plus rapidement, grâce à des possibilités plus grandes offertes par la nouvelle façon de le fabriquer et à une plus grande sûreté du produit fini redevable à une conception et une fabrication mieux maîtrisées : un raccord plus léger pourra ainsi être obtenu.

De façon plus précise, un but de l'invention est de permettre la fabrication aisée de raccords creux, présentant une surface externe et une surface interne, cette dernière notamment pouvant être de forme complexe, par exemple coudée, de section non uniforme, constamment évolutive, non développable sur un plan, ou présentant une contre-dépouille, et avec une épaisseur de paroi mince (typiquement 1,5 mm au lieu de 2,3 mm à 2,6 mm selon les procédés connus). Un objet de l'invention qui est subordonné au précédent est la définition de règles de fabrication pour façonner ce raccord, sans exercer d'efforts susceptibles de rompre la paroi mince, en évitant des incertitudes de cotes de fabrication dont les conséquences seraient inacceptables avec une paroi mince, et en respectant la forme dérivée de la surface interne même si elle est complexe et difficile d'accès.

Le procédé comprend les étapes de la revendication 1.

Dans un mode préféré de mise en oeuvre du procédé objet de l'invention, ladite machine-outil à commande numérique est une machine à cinq axes, notamment une machine-outil mobile dans trois translations et deux rotations relativement à la pièce usinée.

Cela sera mieux compris, comme d'autres aspects de l'invention, des figures suivantes :
- La figure 1 est un raccord ;
- la figure 2 est un fragment d'un autre raccord ;
- la figure 3 illustre quelques outils ;
- la figure 4 illustre une vérification ;
- et la figure 5 représente l'usinage du raccord.

L'invention sera maintenant décrite en référence aux figures et d'abord à la figure 1. Elle représente un raccord de tuyaux d'un genre classique qu'il s'agira de construire au moyen de l'invention. Il porte la référence 1 et relie deux tuyaux 2 et 3 placés à angle droit à des distances L et 1. La conception se fait en considérant d'abord les fonctions et contraintes de conception du raccord. Il s'agit notamment d'éléments dimensionnels comme les positions et diamètres des tuyaux à raccorder et les positions et caractéristiques des jonctions du raccord à d'autres endroits de la structure environnante : comme il est usuel, le raccord 1 a aussi une fonction de soutien des tubes 2 et 3, ici par une potence 4 et une tige 5 dont les extrémités opposées, qui ne sont pas représentées, sont fixées à la carlingue de l'aéronef ; enfin, des tresses de mise à la masse électrique 7 et 8 relient des colliers 9 et 10 enserrés autour des tuyaux 2 et 3 au raccord 1 et, respectivement, à la potence 4 et à la tige 5. Les tuyaux 2 et 3 sont ainsi portés au même potentiel que la carlingue de l'avion. La conception du raccord 1 doit donc être complétée par l'addition de fixations à la potence 4 et à la tige 5. La pression du fluide dans le raccord est aussi une contrainte à considérer.

L'opérateur crée une première version du raccord 1. Il détermine de façon optimisée les positions des conduits reliant les tuyaux, les épaisseurs de matière entourant ces conduits, les formes et les dimensions des portions de raccordement à la structure environnante, et les caractéristiques locales du raccord 1. Il peut utiliser certains logiciels simples de calcul, pour obtenir les rayons de courbure du conduit ou les épaisseurs du raccord d'après le trajet du fluide et sa pression. Le raccord existe alors sous forme d'un modèle défini par ses paramètres, qui sont entrés dans un logiciel de CFAO (conception - fabrication assistée par ordinateur). Ici le raccord 1 a une forme générale de coude arrondi, et il comprend encore une bride 11 proche du tuyau 2 et en forme de collerette circulaire, et une nervure 12 à l'extrados du coude. La bride 11 et la nervure 12 sont munies de perçages pour l'insertion des vis de fixation et pour la réception des tresses 7 et 8.

Les paramètres fournis sont couramment au nombre de plusieurs dizaines pour définir complètement les limites du raccord 1. Ils comprennent notamment, du côté du tuyau 2, les longueurs L1 d'une extrémité en surépaisseur du raccord 1, L2 d'une partie rectiligne du raccord 1, L3 séparant la bride 11 du bout du raccord 1 ; du côté du tuyau 3, les longueurs 11 d'une autre extrémité en surépaisseur du raccord 1, et 12 d'une autre partie rectiligne du raccord 1 ; les diamètres internes du conduit du raccord 1, estimés d'après les diamètres externes d2 et d3 des tuyaux 2 et 3 ; les épaisseurs et les surépaisseurs, telles que e, du raccord 1 à ses différentes portions ; le rayon et l'épaisseur de la bride 11, le contour de l'épaisseur de la nervure 12, et les positions de leur perçages d'après la position de la partie tubulaire du raccord 1 et celles de la potence 4 et de la tige 5.

Les tronçons du raccord 1 sont aussi modélisés par leurs directions, ou les angles qu'ils font. Les coudes peuvent être modélisés soit comme arrondis, avec des rayons de courbures et des angles d'extension, soit comme des successions de tronçons rectilignes avec des longueurs et des directions différentes.

Le fichier de paramètres est avantageusement rendu plus maniable si les paramètres sont indépendants - autant que possible - pour faciliter les reprises de conception par l'opérateur. Les longueurs L1 et L3 définissant la position de la bride 11 sur la portion rectiligne peuvent ainsi devoir être modifiées si la potence 4 est déplacée latéralement dans la conception finale de l'aéronef, sans que la longueur L2 change. Il est alors conseillé de faire partir toutes les longueurs L1, L2 et L3 d'une origine commune telle qu'un bout ou un point fixe du raccord 1 pour les rendre indépendantes. Il faut s'attendre, en général, à des changements de longueur ou d'échelle du raccord 1 avant sa fabrication.

Le logiciel de CFAO peut exprimer ensuite à volonté le modèle du raccord 1 par un ensemble de points, pour une modélisation en éléments finis par exemple.

Une vérification du raccord 1 est ensuite entreprise par l'opérateur. Elle est de nature empirique et permet de vérifier qu'aucune impossibilité de conception n'a été introduite. L'opérateur modifie les paramètres associés aux régions défectueuses du raccord. Un exemple sera donné pour une situation usuelle, pour un raccord à embranchement 7 comme celui de la figure 2 : il faut s'assurer que la jonction entre le tube principal 15 et l'embranchement 16 se fait avec des rayons de courbure supérieurs à une valeur déterminée. L'étape consisterait alors à casser le raccord à angle vif pour le remplacer par les raccordements arrondis représentés en pointillé 17.

Un autre genre de vérification auquel on peut procéder est celui de la résistance mécanique. Le modèle du raccord est divisé en éléments finis et analysé d'après les efforts auxquels on suppose qu'il sera soumis. Si des zones de contraintes excessives sont remarquées, des surépaisseurs sont ajoutées, ou des nervures telles la nervure 18 de la figure 1 entre la bride 11 et la partie tubulaire du raccord 1. De telles nervures se déploieront souvent entre des portions formant un angle sur le raccord, comme des portions en embranchement ; une nervure 19 pourra ainsi éventuellement être ajoutée entre les portions 15 et 16 du raccord de la figure 2. Pour cette vérification, le calcul sera fait automatiquement avec une modélisation en éléments finis du raccord, dont la structure pourra ensuite être reprise par l'opérateur par un ajustement de paramètres existant (l'épaisseur, etc.) ou par l'addition de nouveaux éléments de structure, définis par de nouveaux paramètres.

Ces étapes de vérification sont en général itératives, chaque nouveau modèle devant être vérifié jusqu'à ce qu'un modèle complètement satisfaisant soit obtenu. Elles peuvent devenir relativement nombreuses si on essaie de réduire le poids du raccord en diminuant les épaisseurs, ce qui est très désirable mais antagoniste des vérifications précédentes, qui amènent plutôt à ajouter de la matière.

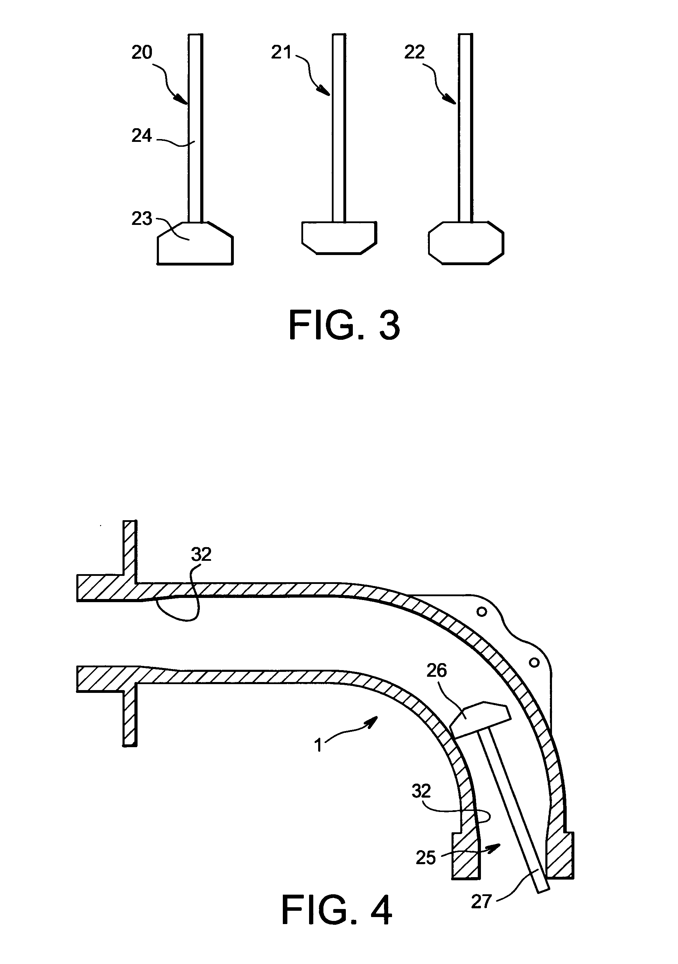

L'étape suivante est une définition d'un programme d'usinage. Tout le raccord 1 devant être usiné, les conditions d'usinage doivent être prévues aussi bien pour la surface externe que la surface interne. Les outils seront généralement des fraises à usinage tangentiel à cause de la prédominance des surfaces courbes. De façon préférée, l'outil sera choisi pour permettre l'usinage à grande vitesse sur une machine à commande numérique afin de réduire le temps d'usinage et le coût de fabrication tout en offrant une meilleure qualité de la surface grâce à une diminution des vibrations. Il sera préféré de n'utiliser que peu d'outils pour tout l'usinage ; si cependant on détermine, par exemple à l'étape suivante, qu'un outil ne permettra pas de tout usiner sur le raccord 1, un ou plusieurs outils supplémentaires seront ajoutés dans le programme d'usinage. Les outils seront définis dans une bibliothèque qui indiquera leurs caractéristiques, notamment dimensionnelles. Si aucun outil existant dans la bibliothèque ne convient, d'autres pourront être ajoutés. Des genres d'outils différents 20, 21 et 22 représentés à la figure 3 permettent des usinages en dépouille, en contre-dépouille ou les deux au moyen de parties coupantes 23 chanfreinées du côté de la queue 24, du côté opposé ou des deux côtés.

Le logiciel possédant la définition géométrique du raccord 1 envisagé et celle des outils détermine donc une série de trajectoires d'usinage nécessaires pour usiner tout le raccord 1 par les outils choisis.

L'étape suivante est une vérification du programme d'usinage, qui est simulé numériquement à l'aide des dimensions des outils choisis. Les vérifications auxquelles on procède sont du genre de la figure 4 : l'outil 25 est introduit dans l'ébauche du raccord 1 et la surface latérale de sa tête d'usinage 26 est active et fraise la surface interne de la partie tubulaire près du coude. Le programme détermine alors s'il est possible de placer l'outil 25 de façon à éviter une collision de la queue 27 avec les parties pleines du raccord. Si une collision est détectée, le programme cherche une position convenable de l'outil 25 pour permettre de continuer l'usinage, sinon un autre outil est proposé en remplacement. L'usinage interne du raccord est plus souvent critique, mais la vérification concerne l'usinage de toutes les surfaces.

Quand un jeu de trajectoires satisfaisant a été trouvé pour toute la surface du raccord 1, il est mémorisé par le logiciel avec le modèle du raccord. Le programme d'usinage comprend en réalité non seulement ces trajectoires de finition, mais des trajectoires d'ébauche dont l'utilité apparaîtra ci-dessous.

Le choix d'un usinage à grande vitesse (UGV) permet d'employer des outils 25 dont la queue 27 est longue, les efforts de coupe latéraux étant réduits, et donc d'accéder plus facilement aux endroits reculés de la surface interne, même si une complication de cette surface telle qu'une contre-dépouille 32 existe, c'est-à-dire une portion fuyante de la surface interne ou un élargissement du conduit qu'on peut choisir pour donner une meilleure résistance du raccord 1 aux jonctions aux tuyaux 2 et 3.

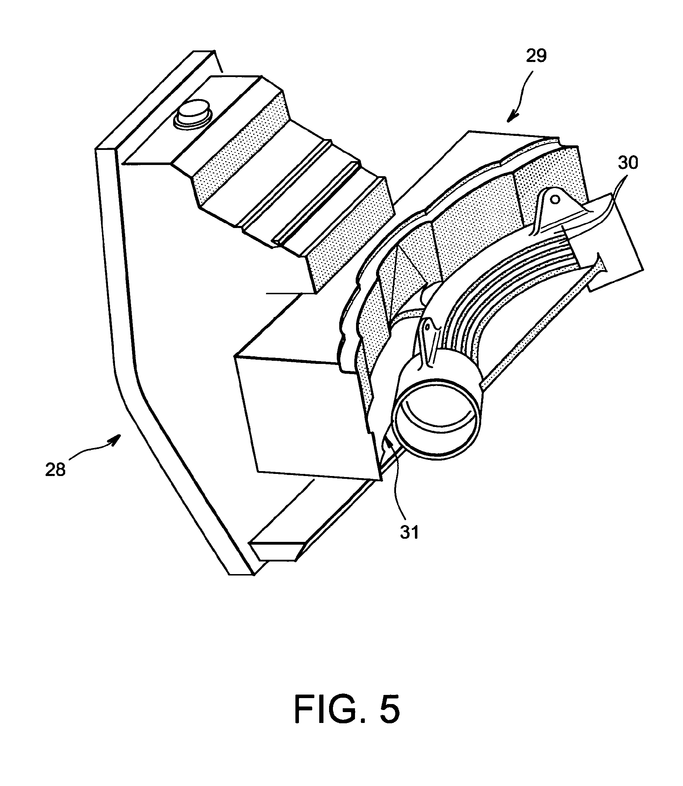

Nous abordons maintenant la description du procédé d'usinage au moyen de la figure 5. La machine-outil utilisée est à commande numérique et comprend une paire de mâchoires 28 entre lesquelles l'ébauche du raccord à usiner est enserrée. Il s'agit d'abord d'un bloc 29 dans la masse duquel le raccord sera façonné. On a représenté ici l'usinage à un instant intermédiaire, dans lequel la forme du raccord 1 est à la fois reconnaissable et partiellement dégagée du reliquat du bloc 29. On préconise de travailler en escalier dans une phase d'ébauche, c'est-à-dire de fraiser le bloc 29 par passes successives parallèles de façon à former des gradins 30 par lesquels la surface extérieure du raccord 1 est ébauchée. L'outil est guidé en fonction du fichier de points du modèle du raccord 1 qu'on a obtenu aux étapes précédentes et en fonction du fichier des trajectoires. Quand une quantité de matière suffisante a été ôtée par ce moyen, un usinage de finition ou de demi-finition du tube est entrepris sur des lignes parallèles et intermédiaires aux précédentes pour obtenir une meilleure égalisation de la surface en gradins et converger vers la surface externe requise. Un usinage ultérieur de finition peut être ajouté pour obtenir une surface bien lisse. L'intérieur du tube est aussi usiné par passes successives, qui comprennent en général des fraisages tangentiels. Ces usinages à fraisage tangentiel sont aussi appliqués à la finition des parties courbes du raccord, qu'elles soient à l'intérieur ou à l'extérieur, selon le schéma de la figure 4. Les zones de raccordement aux tuyaux 2 et 3 sont reprises si nécessaire par des outils spécifiques pour assurer la qualité de surface aussi lisse que voulu. Enfin, le cordon de raccordement 31 que l'on a laissé subsister entre l'ébauche du raccord et le reliquat du bloc 29 est découpé pour séparer le raccord d'un talon restant fixé à la machine. Un usinage final de ce cordon peut être entrepris d'une autre façon, par exemple au moyen d'une scie hors de la machine-outil à commande numérique.

Un aspect important est que le raccord 1 est entièrement usiné, sans démontage intermédiaire qui produirait des incertitudes de cotes. Il peut donc être réalisé avec une épaisseur de paroi plus petite sans crainte d'une rupture à la pression du fluide. Un seul exemplaire d'une série doit être vérifié pour s'assurer qu'il tienne à la pression du fluide, étant donné que la matière dans laquelle les raccords de cette série sont usinés est contrôlée par le fournisseur pour l'absence de porosité, de bulles, etc. avant l'usinage. Des conduits mieux adaptés à l'écoulement, et notamment à section constante et parfaitement arrondis, peuvent être percés. Une épaisseur plus faible des parois, de 1,5 mm environ au lieu de 2,3 à 2,6 mm exigés pour le moulage, est devenue possible et conduit à des gains de masse d'environ 30%.

Un autre aspect important de l'invention réside dans le choix préféré d'un procédé d'usinage à grande vitesse (UGV) qui permet de réduire les vibrations, améliorant la qualité de l'usinage, et les efforts de coupe latéraux, permettant d'employer des outils plus longs qui accèdent mieux aux endroits reculés ou en contre-dépouille de la surface interne. Cette circonstance est particulièrement précieuse pour des surfaces coudées, où de telles difficultés d'accès apparaissent toujours.

## Revendications

1. Procédé de fabrication d'un raccord de tuyaux d'aéronef avec une surface interne comportant un coude, ledit raccord comportant des parties tubulaires et étant limité exclusivement par des surfaces usinées, **caractérisé en ce qu'**il comprend les étapes suivantes :
définition de fonctions et de contraintes, notamment dimensionnelles, du raccord ;
- élaboration d'un plan du raccord (1) à partir desdites fonctions et contraintes ;
- vérification de fabrication possible du raccord, et révision du plan en cas de diagnostic de défaut à la vérification ;
- définition d'un programme d'usinage du raccord, comprenant une sélection d'outils, de trajectoires des outils et de paramètres de coupe par un logiciel à partir du plan ;
- simulation du programme, et révision du programme en cas de diagnostic d'erreur à la simulation ; et
- fabrication du raccord par application du programme d'usinage sur un bloc (29) serré sur une machine-outil à commande numérique pilotée d'après le programme d'usinage de façon à usiner toute la surface du raccord, aussi bien interne qu'externe, sans démontage intermédiaire du raccord de la machine-outil, l'usinage se terminant par la séparation du raccord du reliquat du bloc restant fixé sur la machine.

2. Procédé de fabrication d'un raccord de tuyaux d'aéronef selon la revendication 1, **caractérisé en ce que** la machine-outil à commande numérique est une machine à cinq axes.

3. Procédé de fabrication d'un raccord de tuyaux d'aéronef selon la revendication 1 ou 2, **caractérisé en ce que** la fabrication comprend des ébauches de tubes par passes successives en gradins, des usinages à l'intérieur des tubes par un fraisage tangentiel, des finitions à ajustement de rayon de courbure par fraisage tangentiel, et une découpe finale du raccord par séparation dudit raccord et d'un talon du bloc, qui reste serré sur la machine-outil.

4. Procédé de fabrication d'un raccord de tuyaux d'aéronef selon l'une quelconque des revendications 1 à 3, **caractérisé en ce que** la vérification comprend une vérification de résistance mécanique du raccord.

5. Procédé de fabrication d'un raccord de tuyaux d'aéronef selon l'une quelconque des revendications 1 à 4, **caractérisé en ce que** la simulation comporte des vérifications de collision des outils et des queues des outils avec le raccord.

6. Procédé de fabrication d'un raccord de tuyaux d'aéronef selon l'une quelconque des revendications 1 à 5, **caractérisé en ce que** l'usinage est un usinage à grande vitesse (UGV).

## Claims

1. Method of manufacturing a pipe fitting comprising tubular parts, **characterized in that** it includes the following steps:
- define functions and constraints (particularly dimensional) of the fitting;
- prepare a drawing of the fitting (1), based on the said functions and constraints;
- verify that it is possible to make the fitting, and revise the drawing if any defects are diagnosed during the verification;
- define a machining program for the fitting, including selection of tools, tool trajectories and cutting parameters, using software and the drawing;
- simulate the program and revise the program if any errors are diagnosed during the simulation; and
- make the fitting by applying the machining program on a clamped block (29) on a numerically controlled machine tool controlled by the machining program so as to machine the entire surface of the fitting, both on the inside and outside, without any intermediate detachment of the fitting from the machine tool, machining ending by the separation of the fitting from the residue of the block still fixed to the machine.

2. Method for manufacturing an aircraft pipe fitting according to claim 1, **characterized in that** the said numerically controlled machine tool is a five-axis machine.

3. Method of manufacturing an aircraft pipe fitting according to either claim 1 or 2, **characterized in that** manufacturing includes working on tube blanks by successive passes in steps, internal machining of the tubes by tangential cutting, finishing with adjustments to the radius of curvature by tangential cutting, and a final cutting of the fitting by separation of the said fitting from a heel of the block remaining fixed to the machine tool.

4. Method of manufacturing an aircraft pipe fitting according to any one of claims 1 to 3, **characterized in that** the check includes a check of the mechanical strength of the pipe fitting.

5. Method of manufacturing an aircraft pipe fitting according to any one of claims 1 to 4, **characterized in that** simulation includes checks to prevent collision between tools and tool shanks with the fitting.

6. Method of manufacturing an aircraft pipe fitting according to any one of claims 1 to 5, **characterized in that** High Speed Machining (HSM) is chosen.

## Patentansprüche

1. Herstellungsverfahren einer Luftfahrzeug-Rohrverbindung mit einer Innenfläche, die einen Bogen bzw. ein Knie aufweist, wobei die Verbindung Rohrabschnitte umfasst, die ausschließlich von maschinell bearbeiteten Oberflächen begrenzt sind, **dadurch gekennzeichnet, dass** es die folgenden Schritte umfasst:
- Festlegen der Funktionen und der insbesondere dimensionalen Grenzwertbedingungen der Verbindung,
- Ausarbeiten eines Plans der Verbindung (1) anhand der Funktionen und Grenzwertbedingungen,
- Überprüfen der möglichen Herstellung der Verbindung und Revidieren des Plans im Fall einer Fehlerdiagnose bei der Überprüfung,
- Festlegen eines Bearbeitungsprogramms der Verbindung, umfassend eine Auswahl von Werkzeugen, von Bearbeitungsbahnen der Werkzeuge und von Schneidparametern durch Software anhand des Plans,
- Simulation des Programms und Revision des Programms im Fall einer Fehlerdiagnose bei der Simulation, und
- Herstellen der Verbindung durch Anwenden des Bearbeitungsprogramms auf einen Block (29), der an einer gemäß dem Bearbeitungsprogramm gesteuerten Werkzeugmaschine mit numerischer bzw. NC-Steuerung eingespannt ist, so dass die gesamte Oberfläche der Verbindung sowohl innen als auch außen ohne zwischenzeitliche Entnahme der Verbindung aus der Werkzeugmaschine bearbeitet wird, wobei die Bearbeitung durch das Lostrennen der Verbindung von dem Reststück des Blocks, das an der Maschine befestigt bleibt, abgeschlossen wird.

2. Herstellungsverfahren einer Luftfahrzeug-Rohrverbindung nach Anspruch 1, **dadurch gekennzeichnet, dass** die Werkzeugmaschine mit NC-Steuerung eine fünfachsige Maschine ist.

3. Herstellungsverfahren einer Luftfahrzeug-Rohrverbindung nach Anspruch 1 oder 2, **dadurch gekennzeichnet, dass** die Herstellung Rohr-Rohlinge durch sukzessive stufenweise Bearbeitungsgänge, Bearbeitungen im Inneren der Rohre durch Tangentialfräsen, Endbearbeitungsgänge mit Anpassung des Krümmungsradius durch Tangentialfräsen sowie einen Endschnitt der Verbindung durch Lostrennen der Verbindung von einem Absatz des Blocks, der an der Werkzeugmaschine eingespannt bleibt, umfasst.

4. Herstellungsverfahren einer Luftfahrzeug-Rohrverbindung nach einem der Ansprüche 1 bis 3, **dadurch gekennzeichnet, dass** die Überprüfung eine Überprüfung der mechanischen Festigkeit der Verbindung umfasst.

5. Herstellungsverfahren einer Luftfahrzeug-Rohrverbindung nach einem der Ansprüche 1 bis 4, **dadurch gekennzeichnet, dass** die Simulation Überprüfungen einer Kollision der Werkzeuge sowie der Werkzeugenden bzw. -schäfte mit der Verbindung umfasst.

6. Herstellungsverfahren einer Luftfahrzeug-Rohrverbindung nach einem der Ansprüche 1 bis 5, **dadurch gekennzeichnet, dass** die Bearbeitung eine Hochgeschwindigkeitsbearbeitung (UGV = usinage à grande vitesse) ist.
